# FASCICULE DE BREVET EUROPEEN

(11) **EP 3 814 719 B1**
(45) Date de publication et mention de la délivrance du brevet: **26.10.2022**
(21) Numéro de dépôt: 19732400.7
(22) Date de dépôt: 26.06.2019
(51) Int. Cl.: G01C 21/20, G01C 23/00

(54) **PROCÉDÉ D'ASSISTANCE À LA NAVIGATION**
VERFAHREN ZUR UNTERSTÜTZUNG BEI DER NAVIGATION
METHOD FOR ASSISTING WITH NAVIGATION

(30) Priorité: 29.06.2018 FR 1856053
(43) Date de publication de la demande: 05.05.2021
(73) Titulaire: Safran Electronics & Defense, 75015 Paris (FR)
(72) Inventeur: OLLAGNIER, Isabelle, 77550 Moissy-Cramayel (FR); ELIE, Philippe, 77550 Moissy-Cramayel (FR)
(74) Mandataire: Lavialle, Bruno François Stéphane
(86) Numéro de dépôt international: PCT/EP2019/067096
(87) Numéro de publication internationale: WO 2020/002482

(56) Documents cités:
- FR-A1- 3 007 545
- US-A- 5 369 589
- US-A1- 2010 023 262

## Description

La présente invention concerne un procédé d'assistance à la navigation telle que la navigation maritime, terrestre ou aérienne.

### Arrière-plan technologique

La plupart des véhicules destinés à couvrir des distances de plusieurs centaines de kilomètres est aujourd'hui pourvue de récepteurs de signaux satellitaires en provenance de satellites d'une constellation appartenant à un système de localisation ou positionnement par satellites. Chaque signal comprend l'heure de son émission par le satellite et une information permettant de déterminer la position du satellite émetteur. A partir de chaque signal reçu, le récepteur peut déterminer la distance qui le sépare du satellite de sorte que, à partir d'au moins quatre signaux provenant de satellites différents, le récepteur peut déterminer :
- une heure précise,
- ses coordonnées x, y, z dans un repère prédéterminé.

Ces systèmes sont dits PNT (« Position Navigation Time ») en ce qu'ils sont agencés pour pouvoir fournir :
- une position actuelle du véhicule sur lequel le récepteur est embarqué ;
- des indications de navigation depuis la position actuelle vers une position souhaitée ;
- une information temporelle précise.

Plusieurs systèmes de ce type existent dont les plus connus sont les systèmes GPS, GALILEO, GLONASS et BEIDU.

D'autres moyens de navigation sont connus par ailleurs, comme :
- la navigation inertielle ;
- la navigation astrale ;
- la navigation à partir d'amers (les amers pouvant être détectés par un dispositif optronique) ;
- la navigation à partir de points radar...

On comprend que lors d'un voyage au long cours la navigation doit être la plus précise possible. FR3007545A1 divulgue un afficheur de navigation de vol qui montre dans un affichage bidimensionnel la position actuelle calculée avec l'hybridation du GPS et des capteurs inertiels au centre de l'affichage. Les positions actuelles calculées par trois unités inertielles sont également affichées sur le même écran.

### Objet de l'invention

Un but de l'invention est de fournir un moyen pour s'assurer de la fiabilité d'une navigation en cours.

### Bref exposé de l'invention

A cet effet, on prévoit, selon l'invention, un procédé d'assistance à la navigation d'un véhicule équipé d'au moins un premier dispositif de positionnement et un deuxième dispositif de positionnement, le procédé comprenant les étapes de :
- à des instants prédéterminés, faire déterminer des premières positions du véhicule par le premier dispositif de positionnement et des deuxièmes positions du véhicule par le deuxième dispositif de positionnement et calculer une valeur d'un premier écart entre chaque première position et la deuxième position du même instant ;
- comparer la valeur du premier écart à un premier seuil et émettre une première alerte quand la valeur du premier écart est supérieure au premier seuil ;
   le procédé comprenant en outre les étapes de :
   - définir sur un écran du véhicule un point de référence correspondant à une position actuelle du véhicule déterminée à partir de la première position la plus récente et une zone environnante qui entoure le point de référence et qui est une représentation en deux dimensions, à une échelle et selon un repère prédéterminés, d'une partie de l'espace entourant le véhicule ;
   - symboliser sur l'écran les premiers écarts en affectant un premier symbole à chaque premier écart et en positionnant chaque premier symbole sur l'écran, par rapport au point de référence, en tenant compte de la valeur du premier écart et d'un trajet parcouru par le véhicule depuis le calcul de la valeur du premier écart, les premiers symboles étant pourvus d'un indicateur chronologique.

Ainsi, par l'invention, il est possible d'indiquer au pilote d'un véhicule dans quelle mesure il peut avoir confiance dans les moyens de positionnement dont il dispose.

D'autres caractéristiques et avantages de l'invention ressortiront à la lecture de la description qui suit d'un mode de mise en œuvre particulier non limitatif de l'invention.

### Brève description des dessins

Il sera fait référence aux dessins annexés, parmi lesquels :
- la figure 1 est une vue schématique en perspective d'un système d'assistance à la navigation selon l'invention ;
- les figures 2 à 5 sont des vues en élévation d'un affichage de ce système pour différentes situations de navigation.

### Exposé détaillé de l'invention

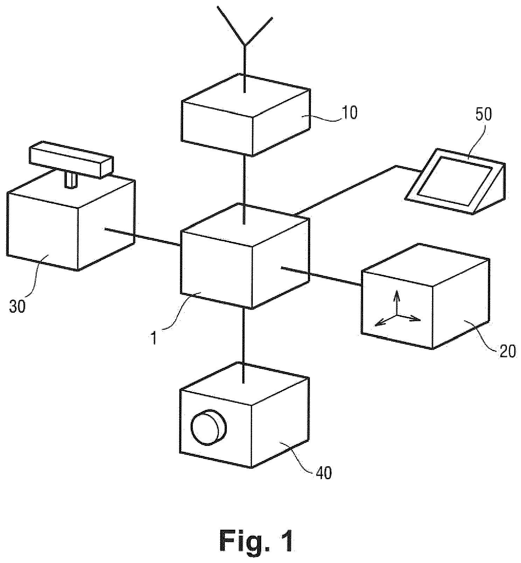

En référence à la figure 1, l'invention est ici décrite en application à un véhicule, et plus particulièrement un navire, équipé d'une unité électronique de commande 1 qui est reliée, d'une part, à des instruments de commande situés sur la passerelle du navire et permettant à l'équipage de piloter le navire et, d'autre part, à des actionneurs agissant sur la barre du navire et les moyens de propulsion du navire.

L'unité électronique de commande 1 est un ordinateur qui comprend, de façon connue en soi, un ou plusieurs processeurs associés à une mémoire contenant des programmes informatiques. Au moins l'un des programmes informatiques comporte des instructions agencées pour permettre de piloter le navire et faire suivre au navire une route de navigation.

L'unité électronique de commande 1 est en outre reliée à :
- un premier dispositif de positionnement par satellites 10 ;
- un deuxième dispositif de positionnement inertiel 20 ;
- un troisième dispositif de positionnement radar 30 ;
- un quatrième dispositif de positionnement astral 40 ;
- un écran 50.

Le dispositif de positionnement par satellites 10 comprend, de façon connue en elle-même, une unité électronique de réception et de traitement de signaux en provenance de satellites appartenant à une constellation de satellites (GPS, GALILEO, GLONASS et/ou BEIDU). L'unité électronique de réception et de traitement comprend un circuit informatique de traitement comprenant un calculateur et une mémoire contenant un programme informatique ayant des instructions agencées pour calculer une position actuelle du navire et une route de navigation entre la position actuelle du navire et un point d'arrivée renseigné par un opérateur. L'unité électronique de réception et de traitement fournit à l'unité électronique de commande 1 :
- une première position actuelle du navire,
- une indication de cap,
- un premier signal d'horloge (la date et l'heure),
- une distance restant à parcourir jusqu'au point d'arrivée,
- une heure d'arrivée estimée...

Le dispositif de positionnement inertiel 20 comprend une centrale inertielle de navigation. Une telle centrale comprend, de façon connue en elle-même, un circuit informatique de traitement relié à des accéléromètres et des gyromètres disposés selon trois axes d'un repère de mesure pour détecter les mouvements du navire parallèlement aux axes du repère de mesure et autour desdits axes. La centrale inertielle fournit à l'unité électronique de commande 1 :
- une deuxième position actuelle du navire déterminée à partir des mouvements détectés,
- un deuxième signal d'horloge...

Le dispositif de positionnement par radar 30 comprend de façon connue en soi un circuit informatique de traitement relié à une antenne radar. Le circuit informatique de traitement exécute un programme qui est stocké dans une mémoire et qui contient des instructions agencées pour déterminer à partir de la forme de la côte une troisième position actuelle du navire. Le dispositif de positionnement par radar 30 fournit cette troisième position actuelle à l'unité électronique de commande 1.

Le dispositif de positionnement astral 40 comprend, de manière connue en elle-même, un circuit informatique de traitement relié à un capteur optronique d'image ayant un champ orienté pour observer le ciel. Le circuit informatique de traitement comprend une mémoire qui contient des éphémérides et un programme informatique contenant des instructions agencées pour permettre au circuit informatique de traitement d'identifier, à partir des éphémérides et du premier signal d'horloge communiqué par l'unité électronique de commande 1, des astres présents dans le champ du capteur optronique et d'en déduire une quatrième position actuelle du navire. Le dispositif de positionnement astral 40 fournit à l'unité électronique de commande 1 la quatrième position actuelle du navire.

L'unité électronique de commande 1 est programmée pour :
- à des instants prédéterminés, faire déterminer des premières positions actuelles par le dispositif de positionnement satellitaire 10 ;
- à chacun de ces mêmes instants, faire déterminer une deuxième position actuelle par le dispositif de positionnement inertiel, calculer une valeur d'un premier écart entre la première position actuelle et la deuxième position actuelle, comparer la valeur du premier écart à un premier seuil et émettre une première alerte quand la valeur du premier écart est supérieure au premier seuil ;

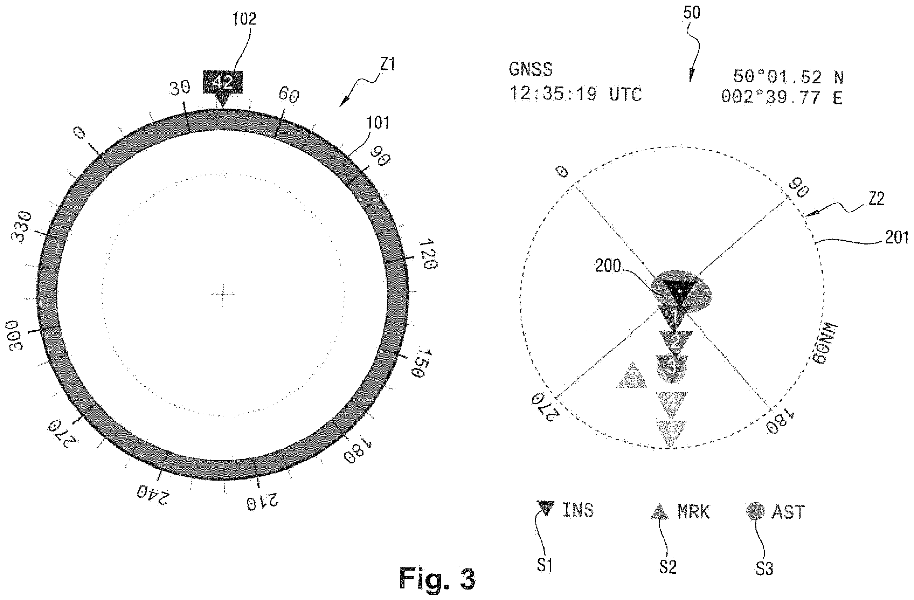

- à chacun de ces mêmes instants, faire déterminer une troisième position actuelle par le dispositif de positionnement par radar 30, calculer une valeur d'un deuxième écart entre la première position actuelle et la troisième position actuelle, comparer la valeur du deuxième écart à un deuxième seuil et émettre une deuxième alerte quand la valeur du deuxième écart est supérieure au deuxième seuil (voir la figure 3 par exemple) ;
- à chacun de ces mêmes instants, faire déterminer une quatrième position actuelle par le dispositif de positionnement astral 40, calculer une valeur d'un troisième écart entre la première position actuelle et la quatrième position actuelle, comparer la valeur du troisième écart à un troisième seuil et émettre une troisième alerte quand la valeur du troisième écart est supérieure au troisième seuil.

Les alertes sont par exemple utilisées pour allumer un voyant sur l'écran 50, sur un tableau de bord de la passerelle, et/ou sont répertoriées dans un rapport auquel l'équipage a accès.

L'unité électronique de commande 1 est programmée pour afficher des informations sur l'écran 50 qui se trouve sur la passerelle pour être visible par l'équipage.

L'unité électronique de commande 1 est programmée pour définir une première zone d'affichage Z1 et une deuxième zone d'affichage Z2 dans l'écran 50. Les zones Z1 et Z2 sont de préférence adjacentes pour en avoir une vision simultanée.

Dans la zone d'affichage Z1 est représenté le cap du navire, ici sous la forme d'une couronne graduée 101 se déplaçant devant un index 102 situé en haut de la zone Z1 de telle manière que la graduation de la couronne graduée 101 se trouvant en regard de l'index 102 corresponde au cap suivi par le navire.

L'unité électronique de commande 1 est programmée pour définir un repère dans la zone Z2 de l'écran 50. Le repère a son origine au centre de l'écran 50 et permet une représentation en deux dimensions, à une échelle prédéterminée, d'une partie de l'espace entourant le navire. Le centre du repère constitue un point de référence 200 et est continument centré sur la première position actuelle et un axe du repère est continument aligné sur le cap suivi par le navire. Une couronne graduée 201 simplifiée, dont la rotation est calée sur celle de la couronne graduée 101, est affichée et délimite la limite de la partie de l'espace entourant le navire.

L'unité électronique de commande 1 est programmée pour :
- symboliser sur l'écran 50 les premiers écarts en affectant un premier symbole S1, ici un triangle à pointe tournée vers le bas, à chaque premier écart et en positionnant chaque premier symbole S1 dans la zone Z2, par rapport au point de référence, en tenant compte de la valeur du premier écart et d'un trajet parcouru par le navire depuis le calcul de la valeur du premier écart. Les premiers symboles S1 sont pourvus d'un indicateur chronologique qui est ici un point pour l'écart dernièrement calculé puis un numéro 1, 2, 3, 4 ou 5 (le premier écart le plus récent après le dernier écart calculé prend l'indicateur 1 tandis que le premier écart le plus ancien prend l'indicateur 5) ;
- symboliser sur l'écran les deuxièmes écarts en affectant un deuxième symbole S2, ici un triangle à pointe tournée vers le haut, à chaque deuxième écart et en positionnant chaque deuxième symbole S2 dans la zone Z2, par rapport au point de référence, en tenant compte de la valeur du deuxième écart et d'un trajet parcouru par le navire depuis le calcul de la valeur du deuxième écart (les deuxièmes symboles sont eux aussi pourvus d'un indicateur chronologique, comme les premiers symboles) ;
- symboliser sur l'écran les troisièmes écarts en affectant un troisième symbole S3, ici un disque, à chaque troisième écart et en positionnant chaque troisième symbole S3 dans la zone Z2, par rapport au point de référence, en tenant compte de la valeur du troisième écart et d'un trajet parcouru par le navire depuis le calcul de la valeur du troisième écart (les troisièmes symboles sont eux aussi pourvus d'un indicateur chronologique, comme les premiers symboles).

Dans le présent mode de mise en œuvre, un nouvel écart est affiché toutes les trois heures, compte-tenu de la longueur du trajet et de la vitesse de déplacement du navire. Pour des trajets plus courts ou des véhicules plus rapides, les écarts peuvent être rajoutés à un rythme plus rapide. Les écarts qui sont calculés dans l'intervalle ne servent qu'à faire remonter des alertes mais ne sont pas affichés. En variante, on peut choisir de négliger les écarts qui ne sont pas utilisés pour l'affichage, ou de calculer les écarts au rythme de l'affichage.

De préférence, l'unité électronique de commande 1 est programmée pour modifier l'apparence des symboles S1, S2, et S3 en fonction de la valeur du premier écart, du deuxième écart et du troisième écart. Par exemple, la couleur du symbole variera du vert au rouge en passant par l'orange en fonction de la valeur de l'écart correspondant. On pourra prévoir que le symbole passe du vert au orange lorsque l'écart dépasse la moitié du seuil d'alerte et vire au rouge lorsque l'écart dépasse le seuil d'alerte.

On comprend que :
- lorsqu'un écart vient d'être calculé et que la valeur de l'écart est nulle, le symbole correspondant à l'écart est affiché au centre du repère sur le point de référence 200, avec l'indicateur chronologique « . » ;
- si la valeur de l'écart n'est pas nulle, le symbole sera affiché dans la zone environnant le point de référence 200, de manière décalée par rapport au point de référence 200 d'une distance correspondant à la valeur de l'écart, en tenant compte de l'échelle du repère, avec l'indicateur chronologique « . » ;

- au fur et à mesure que s'accroît la durée entre l'instant présent et l'instant où l'écart a été calculé, le symbole correspondant est affiché à une distance du point de référence 200 correspondant à la valeur de l'écart et la distance parcourue par le navire pendant ladite durée (en tenant compte de l'échelle du repère) mais si la distance à laquelle le symbole doit être positionné est supérieure à la distance couverte par la zone environnant le point de référence 200 (cette distance étant symbolisée par la couronne graduée 201), l'écart cesse d'être affiché ;
- comme le repère est aligné avec le cap et que la trajectoire est rectiligne, les symboles correspondant à des écarts nuls sont normalement alignés sur une ligne droite en arrière du point de référence 200 (voir par exemple la figure 3) ;
- l'indicateur chronologique reste le même tant qu'un nouvel écart n'a pas été calculé et, à chaque fois qu'un nouvel écart a été calculé, le symbole correspondant au nouvel écart s'affiche avec l'indicateur chronologique « . », tandis que l'indicateur chronologique de chacun des symboles correspondant aux écarts plus anciens est incrémenté de un.

L'équipage peut ainsi visualiser s'il peut faire confiance au dispositif de navigation satellitaire 10, qui est le dispositif de navigation principal puisque c'est lui qui fournit le cap à suivre.

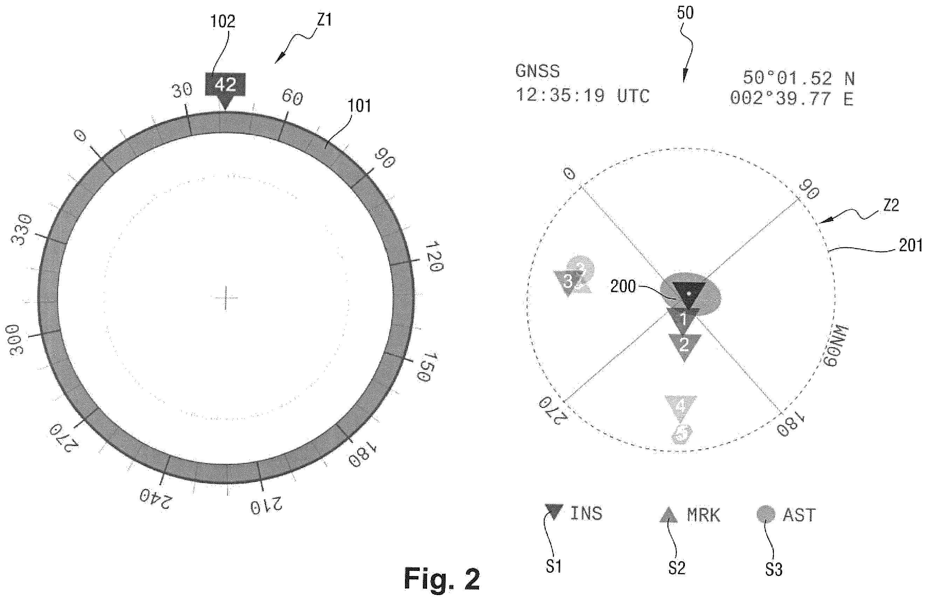

Si tous les écarts de même indicateur chronologique s'affichent en un endroit décalé (comme sur la figure 2, indicateur chronologique 3), on peut supposer une défaillance du dispositif de navigation satellitaire 10. L'équipage devra alors vérifier si les prochains écarts sont eux-aussi décalés et adaptera alors sa navigation.

A la figure 3, les symboles S1, S3 portant l'indicateur chronologique « 3 » sont groupés sur la ligne verticale en arrière du point de référence tandis que le symbole S2 portant l'indicateur chronologique « 3 » est décalé : on peut en déduire que le dispositif de positionnement par radar 30 est défaillant à cet instant.

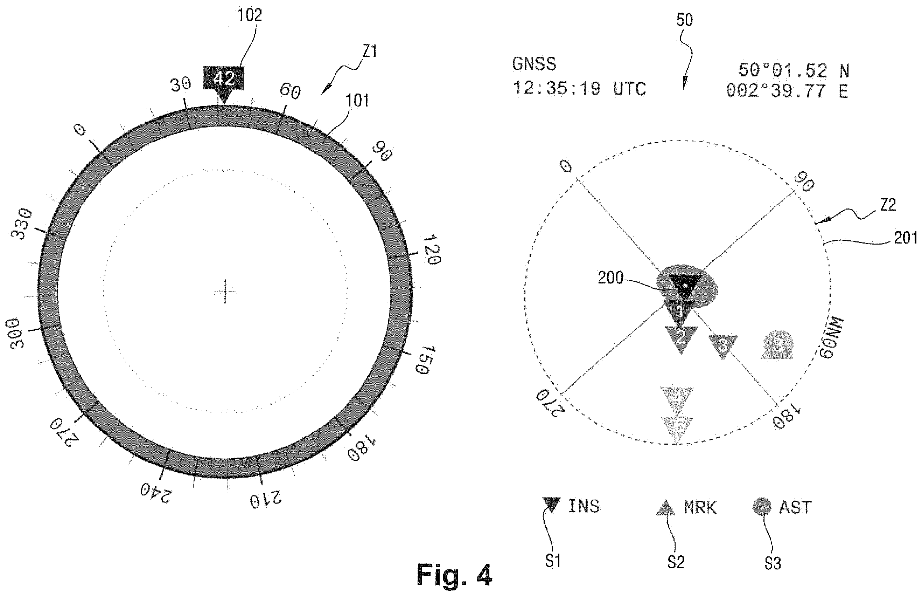

A la figure 4, tous les symboles portant l'indicateur chronologique « 3 » sont décalés. Les symboles S2, S3 portant l'indicateur chronologique « 3 » sont superposés tandis que le symbole S1 portant l'indicateur chronologique « 3 » est décalé par rapport aux deux autres : on peut en déduire que le dispositif de positionnement satellitaire 10 et le dispositif de positionnement inertiel 20 sont défaillant à cet instant. On notera que comme les symboles S2 et S3 sont superposés, les deux positions fournies respectivement par le dispositif de positionnement par radar 30 et le dispositif de positionnement astral 40 correspondent l'une à l'autre : le signal d'horloge fourni par le dispositif de positionnement satellitaire 10 et utilisé par le dispositif de positionnement astral 40 est a priori correct.

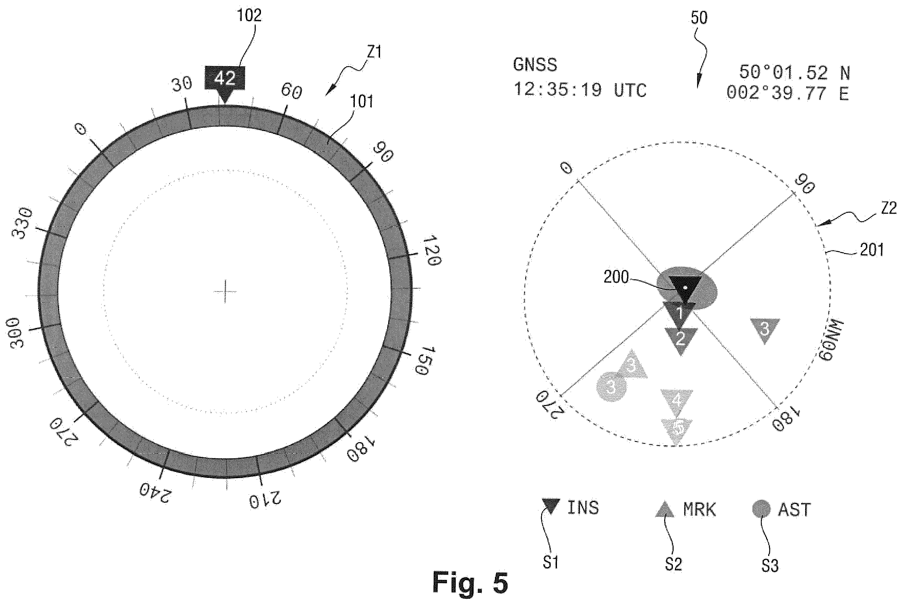

A la figure 5, les symboles S1, S2 portant l'indicateur chronologique « 3 » sont décalés à gauche tandis que le symbole S3 portant l'indicateur chronologique « 3 » est décalé à droite. On peut supposer dans ce cas que les deux positions fournies respectivement par le dispositif de positionnement par radar 30 et le dispositif de positionnement inertiel 20 correspondent l'une à l'autre et qu'il y a une défaillance du signal horaire fourni par le dispositif de positionnement satellitaire 10 qui est aussi utilisé par le dispositif de positionnement astral 40.

L'unité électronique de commande 1 est programmée pour émettre :
- une quatrième alerte quand la valeur du premier écart est supérieure au premier seuil et la valeur du deuxième écart est supérieure au deuxième seuil ;
- une cinquième alerte quand la valeur du premier écart est supérieure au premier seuil et la valeur du troisième écart est supérieure au troisième seuil ;
- une sixième alerte quand la valeur du premier écart est supérieure au premier seuil, la valeur du deuxième écart est supérieure au deuxième seuil et la valeur du troisième écart est supérieure au troisième seuil (voir les figures 2 et 5 par exemple, les symboles portant l'indicateur chronologique 3 sont tous décalés).

Les alertes sont par exemple utilisées pour allumer un voyant sur l'écran 50, sur le tableau de bord de la passerelle, et/ou sont répertoriées dans un rapport auquel l'équipage a accès.

L'unité électronique de commande 1 est en outre programmée pour :
- calculer une différence entre le signal d'horloge fourni par le dispositif de positionnement satellitaire 10 et le signal d'horloge fourni par le dispositif de positionnement inertiel 20 ;
- émettre une septième alerte si cette différence a une valeur absolue supérieure à un quatrième seuil ;
- afficher sur l'écran une courbe représentative d'une variation au cours du temps de la différence entre les signaux d'horloge, et une limite correspondant au quatrième seuil.

La septième alerte est par exemple utilisée pour allumer un voyant sur l'écran 50, sur le tableau de bord de la passerelle, et/ou est répertoriée dans un rapport auquel l'équipage a accès.

Bien entendu, l'invention n'est pas limitée au mode de mise en œuvre décrit mais englobe toute variante entrant dans le champ dans la définition de l'invention figurant dans les revendications.

En particulier, l'invention est utilisable avec d'autres types de dispositif de positionnement. Le véhicule peut ainsi être équipé d'un module de veille optronique comprenant un circuit informatique de traitement relié à un capteur optronique d'image monté sur un organe de pointage piloté par le circuit informatique de traitement pour pointer le capteur optronique d'image vers des amers de manière que le circuit informatique de traitement calcule une position actuelle du véhicule.

L'invention est également applicable à un navire qui serait équipé d'un nombre différent de dispositifs de positionnement, par exemple seulement deux dispositifs de positionnement, comme un dispositif de positionnement satellitaire et un dispositif de positionnement inertiel.

Le repère peut ne pas être centré ou aligné sur le cap.

L'alerte peut n'être utilisée que pour commander un affichage décalé du symbole correspondant à l'écart ayant dépassé le seuil d'alerte.

L'affichage peut être organisé différemment de celui décrit.

L'affichage peut être organisé différemment de celui décrit.

## Revendications

1. Procédé d'assistance à la navigation d'un véhicule équipé d'au moins un premier dispositif de positionnement (10) et un deuxième dispositif de positionnement (20), le procédé comprenant les étapes de :
- à des instants prédéterminés, faire déterminer des premières positions du véhicule par le premier dispositif de positionnement et des deuxièmes positions du véhicule par le deuxième dispositif de positionnement et calculer une valeur d'un premier écart entre chaque première position et la deuxième position du même instant ;
- comparer la valeur du premier écart à un premier seuil et émettre une première alerte quand la valeur du premier écart est supérieure au premier seuil ;
le procédé comprenant en outre les étapes de :
- définir sur un écran (50) du véhicule un point de référence correspondant à une position actuelle du véhicule déterminée à partir de la première position la plus récente et une zone environnante qui entoure le point de référence et qui est une représentation en deux dimensions, à une échelle et selon un repère prédéterminés, d'une partie de l'espace entourant le véhicule ;
- symboliser sur l'écran les premiers écarts en affectant un premier symbole (S1) à chaque premier écart et en positionnant chaque premier symbole sur l'écran, par rapport au point de référence, en tenant compte de la valeur du premier écart et d'un trajet parcouru par le véhicule depuis le calcul de la valeur du premier écart, les premiers symboles étant pourvus d'un indicateur chronologique.

2. Procédé selon la revendication 1, dans lequel un axe du repère de la zone environnante est continument aligné sur le cap suivi par le véhicule.

3. Procédé selon la revendication 1 ou la revendication 2, dans lequel le véhicule est équipé d'au moins un troisième dispositif de positionnement (30, 40), le procédé comprenant les étapes de :
- aux instants prédéterminés, faire déterminer des troisièmes positions du véhicule par le troisième dispositif de positionnement et calculer une valeur d'un deuxième écart entre la première position et la troisième position ;
- comparer la valeur du deuxième écart à un deuxième seuil et émettre une deuxième alerte quand la valeur du deuxième écart est supérieure au deuxième seuil ;
le procédé comprenant en outre l'étape de :
- symboliser sur l'écran (50) les deuxièmes écarts en affectant un deuxième symbole (S2) à chaque deuxième écart et en positionnant chaque deuxième symbole sur l'écran, par rapport au point de référence, en tenant compte de la valeur du deuxième écart et d'un trajet parcouru par le véhicule depuis le calcul de la valeur du deuxième écart, les deuxièmes symboles étant pourvus d'un indicateur chronologique.

4. Procédé selon la revendication 3, comprenant l'étape d'émettre une troisième alerte quand : la valeur du premier écart est supérieure au premier seuil et la valeur du deuxième écart est supérieure au deuxième seuil.

5. Procédé selon la revendication 3 ou la revendication 4, dans lequel le troisième dispositif de positionnement (40) est un dispositif de positionnement astral.

6. Procédé selon l'une quelconque des revendications 3 à 5, dans lequel le troisième dispositif de positionnement est un dispositif de positionnement par radar (30).

7. Procédé selon l'une quelconque des revendications précédentes, dans lequel le premier dispositif de positionnement (10) comprend une unité électronique de réception et de traitement de signaux satellitaires.

8. Procédé selon la revendication 7, dans lequel le deuxième dispositif de positionnement (20) comprend une centrale inertielle de navigation.

9. Procédé selon la revendication 8, dans lequel le premier dispositif de positionnement (10) et le deuxième dispositif de positionnement (20) fournissent un signal d'horloge et le procédé comprend l'étape de calculer une différence entre les signaux d'horloge l'un à l'autre et d'émettre une quatrième alerte si cette différence a une valeur absolue supérieure à un troisième seuil.

10. Procédé selon la revendication 9, comprenant l'étape d'afficher sur l'écran (50) une courbe représentative d'une variation au cours du temps de la différence entre les signaux d'horloge, et une limite correspondant au troisième seuil.

11. Procédé selon l'une quelconque des revendications précédentes, comprenant l'étape de modifier l'apparence du premier symbole en fonction de la valeur du premier écart.

## Patentansprüche

1. Verfahren zur Unterstützung bei der Navigation eines Fahrzeugs, das mit mindestens einer ersten Positionierungsvorrichtung (10) und einer zweiten Positionierungsvorrichtung (20) ausgestattet ist, wobei das Verfahren die Schritte umfasst:
- zu vorbestimmten Zeitpunkten, Veranlassen, dass erste Positionen des Fahrzeugs durch die erste Positionierungsvorrichtung und zweite Positionen des Fahrzeugs durch die zweite Positionierungsvorrichtung bestimmt werden, und Berechnen eines Werts einer ersten Abweichung zwischen jeder ersten Position und der zweiten Position desselben Zeitpunkts;
- Vergleichen des Werts der ersten Abweichung mit einem ersten Schwellenwert und Aussenden eines ersten Alarms, wenn der Wert der ersten Abweichung größer als der erste Schwellenwert ist;
wobei das Verfahren ferner die Schritte umfasst:
- Definieren eines Bezugspunktes auf einem Bildschirm (50) des Fahrzeugs, der einer aktuellen Position des Fahrzeugs entspricht, die anhand der jüngsten ersten Position bestimmt wird, und einer Umgebungszone, die den Bezugspunkt umgibt und die eine Darstellung in zwei Dimensionen mit einem vorbestimmten Maßstab und gemäß einem vorbestimmten Bezugsystem eines Teils des Raums ist, der das Fahrzeug umgibt;
- symbolisches Darstellen der ersten Abweichungen auf dem Bildschirm, indem jeder ersten Abweichung ein erstes Symbol (S1) zugeordnet wird und indem jedes erste Symbol auf dem Bildschirm positioniert wird, in Bezug auf den Bezugspunkt, während der Wert der ersten Abweichung und eine Strecke, die von dem Fahrzeug ab der Berechnung des Werts der ersten Abweichung zurückgelegt wurde, berücksichtigt werden, wobei die ersten Symbole mit einer Zeitanzeige versehen werden.

2. Verfahren nach Anspruch 1, bei dem eine Achse des Bezugssystems der Umgebungszone stetig auf den Kurs, den das Fahrzeug verfolgt, ausgerichtet wird.

3. Verfahren nach Anspruch 1 oder Anspruch 2, bei dem das Fahrzeug mit mindestens einer dritten Positionierungsvorrichtung (30, 40) ausgestattet ist, wobei das Verfahren die Schritte umfasst:
- zu vorbestimmten Zeitpunkten, Veranlassen, dass dritte Positionen des Fahrzeugs durch die dritte Positionierungsvorrichtung bestimmt werden, und Berechnen eines Werts einer zweiten Abweichung zwischen der ersten Position und der dritten Position;
- Vergleichen des Werts der zweiten Abweichung mit einem zweiten Schwellenwert und Aussenden eines zweiten Alarms, wenn der Wert der zweiten Abweichung größer als der zweite Schwellenwert ist;
wobei das Verfahren ferner den Schritt umfasst:
- symbolisches Darstellen der zweiten Abweichungen auf dem Bildschirm (50), indem jeder zweiten Abweichung ein zweites Symbol (S2) zugeordnet wird und indem jedes zweite Symbol auf dem Bildschirm positioniert wird, in Bezug auf den Bezugspunkt, während der Wert der zweiten Abweichung und eine Strecke, die von dem Fahrzeug ab der Berechnung des Werts der zweiten Abweichung zurückgelegt wurde, berücksichtigt werden, wobei die zweiten Symbole mit einer Zeitanzeige versehen werden.

4. Verfahren nach Anspruch 3, umfassend den Schritt des Aussendens eines dritten Alarms, wenn: der Wert der ersten Abweichung größer als der erste Schwellenwert und der Wert der zweiten Abweichung größer als der zweite Schwellenwert ist.

5. Verfahren nach Anspruch 3 oder Anspruch 4, bei dem die dritte Positionierungsvorrichtung (40) eine astrale Positionierungsvorrichtung ist.

6. Verfahren nach einem der Ansprüche 3 bis 5, bei dem die dritte Positionierungsvorrichtung eine Positionierungsvorrichtung (30) mittels Radars ist.

7. Verfahren nach einem der vorhergehenden Ansprüche, bei dem die erste Positionierungsvorrichtung (10) eine elektronische Satellitensignalempfangs- und -verarbeitungseinheit umfasst.

8. Verfahren nach Anspruch 7, bei dem die zweite Positionierungsvorrichtung (20) eine Trägheitsnavigationsmesseinheit umfasst.

9. Verfahren nach Anspruch 8, bei dem die erste Positionierungsvorrichtung (10) und die zweite Positionierungsvorrichtung (20) ein Taktsignal liefern und das Verfahren den Schritt des Berechnens einer Differenz zwischen den Taktsignalen zueinander und des Sendens eines vierten Alarms umfasst, wenn diese Differenz einen absoluten Wert hat, der größer als ein dritter Schwellenwert ist.

10. Verfahren nach Anspruch 9, umfassend den Schritt des Anzeigens auf dem Bildschirm (50) einer Kurve, die repräsentativ für eine Variation über die Zeit der Differenz zwischen den Taktsignalen ist, und eines Grenzwerts, der dem dritten Schwellenwert entspricht.

11. Verfahren nach einem der vorhergehenden Ansprüche, umfassend den Schritt des Modifizierens des Aussehens des ersten Symbols in Abhängigkeit von dem Wert der ersten Abweichung.

## Claims

1. A method of assisting navigation of a vehicle fitted at least with a first positioning device (10) and with a second positioning device (20), the method comprising the steps of:
• at predetermined instants, causing first positions of the vehicle to be determined by the first positioning device and second positions of the vehicle to be determined by the second positioning device, and calculating the value of a first discrepancy between each first position and the second position at the same instant; and
• comparing the value of the first discrepancy with a first threshold, and issuing a first warning when the value of the first discrepancy is greater than the first threshold;
the method further comprising the steps of:
• defining on a screen (50) of the vehicle both a reference point corresponding to a current position of the vehicle determined from the most recent first position and also a surrounding zone around the reference point and constituting a two-dimensional representation, at a predetermined scale and in a predetermined reference frame, of a portion of the space surrounding the vehicle; and
• . symbolizing the first discrepancies on the screen by allocating a first symbol (S1) to each first discrepancy and by positioning each first symbol on the screen, relative to the reference point, while taking account both of the value of the first discrepancy and also of the path travelled by the vehicle since calculating the value of the first discrepancy, the first symbols being provided with respective chronological indicators.

2. A method according to claim 1, wherein an axis of the reference frame of the surrounding zone is continuously aligned on the heading followed by the vehicle.

3. A method according to claim 1 or claim 2, wherein the vehicle is fitted at least with a third positioning device (30, 40) the method comprising the steps of:
• at the predetermined instants, causing third positions of the vehicle to be determined by the third positioning device, and calculating the value of a second discrepancy between the first position and the third position; and
• comparing the value of the second discrepancy with a second threshold, and issuing a second warning when the value of the second discrepancy is greater than the second threshold;
the method further comprising the step of:
• symbolizing the second discrepancies on the screen (50) by allocating a second symbol (S2) to each second discrepancy and by positioning each second symbol on the screen, relative to the reference point, while taking account both of the value of the second discrepancy and also of the path travelled by the vehicle since calculating the value of the second discrepancy, the second symbols being provided with respective chronological indicators.

4. A method according to claim 3, including the step of issuing a third warning when: the value of the first discrepancy is greater than the first threshold and the value of the second discrepancy is greater than the second threshold.

5. A method according to claim 3 or claim 4, wherein the third positioning device (40) is a celestial positioning device.

6. A method according to any one of claims 3 to 5, wherein the third positioning device is a radar positioning device (30).

7. A method according to any preceding claim, wherein the first positioning device (10) comprises an electronic unit for receiving and processing satellite signals.

8. A method according to claim 7, wherein the second positioning device (20) comprises an inertial navigation unit.

9. A method according to claim 8, wherein the first positioning device (10) and the second positioning device (20) supply respective clock signals, and the method includes a step of calculating the difference between the clock signals relative to each other and of issuing a fourth warning if the difference has an absolute value greater than a third threshold.

10. A method according to claim 9, including the step of displaying a curve on the screen (50), the curve representing variation over time in the difference between the clock signals, together with a limit corresponding to the third threshold.

11. A method according to any preceding claim, including the step of modifying the appearance of the first symbol as a function of the value of the first discrepancy.
